# EUROPÄISCHE PATENTANMELDUNG

(11) **EP 1 634 808 A1**
(43) Veröffentlichungstag der Anmeldung: **15.03.2006**
(21) Anmeldenummer: 04021662.4
(22) Anmeldetag: 11.09.2004
(51) Int. Cl.: B64F 1/22

(54) **Fahrzeug zum Schleppen und Rangieren von Luftfahrzeugen**

(71) Anmelder: Tokx GmbH & Co.KG, 47998 Krefeld (DE)
(72) Erfinder: Eckert, Kersten, 50374 Erftstadt (DE)
(74) Vertreter: Stenger, Watzke & Ring

(57) **Zusammenfassung**

Die Erfindung betrifft ein Fahrzeug zum Schleppen und Rangieren von Luftfahrzeugen, mit welchem ein Fahrwerk (1) eines Luftfahrzeugs aufnehmbar und vom Untergrund abhebbar ist und welches auf jeder Seite der Längsachse des Fahrzeugs wenigstens ein Rad (11,12) oder Raupenfahrwerk aufweist. Die Räder oder Raupenfahrwerke einer Seite sind unabhängig von denen der anderen Seite angetrieben. Das Fahrzeug ist durch Vorgabe unterschiedlicher Drehzahlen der Räder oder Raupenfahrwerke lenkbar.

## Beschreibung

Die Erfindung betrifft ein Fahrzeug zum Schleppen und Rangieren von Luftfahrzeugen, mit welchem ein Fahrwerk eines Luftfahrzeugs aufnehmbar und vom Untergrund abhebbar ist und welches auf jeder Seite der Längsachse des Fahrzeugs wenigstens ein Rad oder Raupenfahrwerk aufweist.

Zum Bugsieren von Flugzeugen oder anderen Luftfahrzeugen auf Flughäfen ist es bekannt, eine Zugstange am Bugradaufbau des Flugzeuges zu befestigen und mittels eines Fahrzeugs die Zugstange zu ziehen oder zu schieben. Das Bewegen eines Flugzeuges mittels einer Zugstange weist allerdings zahlreiche Nachteile auf. Das Befestigen und Lösen der Zugstange zwischen Flugzeug und Fahrzeug ist arbeits- und zeitintensiv. Darüber hinaus ist es notwendig, für jeden Flugzeugtyp eine speziell auf diesen angepaßte Zugstange zu verwenden. Zusätzlich ist das Flugzeug über die angelenkte Zugstange schwierig und nur eingeschränkt manövrierbar. Schließlich müssen die Schleppfahrzeuge relativ schwer sein, um bei Verwendung einer Zugstange eine ausreichende Reibung zwischen den Rädern des Schleppfahrzeugs und dem Untergrund zu erzeugen. Durch Verwendung einer Zugstange wird die Länge des Schleppverbandes vergrößert. Der Einsatz derartiger Schleppfahrzeuge ist unter beengten Platzverhältnissen nur bedingt möglich.

Des weiteren sind zahlreiche stangenlose Flugzeugschlepper bekannt. Diese Schleppfahrzeuge weisen im Allgemeinen im Heckbereich eine U-förmige Ausnehmung auf, in welcher eine Hubvorrichtung zum Anheben des Bugfahrwerks des Flugzeugs angeordnet ist. Das Bugfahrwerk des Flugzeugs wird mittels dieser Hubvorrichtung angehoben und auf dieser fixiert, so daß über die Hubvorrichtung Schleppkräfte vom Schleppfahrzeug auf das Flugzeug übertragen werden. Diese Schleppfahrzeuge weisen eine bessere Manövrierbarkeit als Schleppstangensysteme auf.

Die Hubvorrichtung des Schleppfahrzeugs greift entweder mittels spezieller Vorrichtungen in entsprechend ausgebildete Ausnehmungen am Gestänge des Bugfahrwerkes ein oder über entsprechend geformte Aufnahmeeinheiten direkt an den Rädern bzw. dem Rad des Bugfahrwerkes an. Schleppfahrzeuge, welche das Bugfahrwerk über das Gestänge aufnehmen, sind nachteilig hinsichtlich ihrer Verwendung auf Flugzeugtypen mit entsprechend passend ausgestalteten Fahrwerksgestängen beschränkt und nicht universell unabhängig vom Flugzeugtyp einsetzbar. Schleppfahrzeuge, welche das Rad bzw. die Räder des Bugfahrwerks eines Flugzeugs aufnehmen und anheben, sind unabhängig vom jeweiligen Flugzeugtypen einsetzbar. Es sind Schleppfahrzeuge bekannt, bei welchen das Rad des Bugfahrwerkes beispielsweise mittels einer schiefen Ebene auf eine Drehscheibe oder Lagerplatte aufgefahren wird. Daneben sind Schleppfahrzeuge bekannt, welche die Bugräder mit hydraulisch betätigten Teleskoparmen einspannen und dann die eingespannten Bugräder mittels einer Hubkinematik um das erforderliche Maß vom Boden anheben.

Bekannte Schleppfahrzeuge weisen eine lenkbare Vorderachse und eine die Hauptstützlast des angehobenen Bugfahrwerks tragende gegebenenfalls ebenfalls lenkbare Hinterachse auf. Um ein Abheben der lenkbaren Vorderachse durch die vom Bugfahrwerk ausgeübte Stützlast während des Schleppvorganges zu vermeiden, sind die Schleppfahrzeuge derart konzipiert, daß der Auflastpunkt des Bugfahrwerks vor der Hinterachse liegt. Des weiteren sind die Schleppfahrzeuge so konzipiert, daß, um ein Abheben der Vorderachse zu vermeiden, möglichst viel Gewicht auf die Vorderachse verteilt wird. Zusätzlich hilft eine möglichst große Länge verbunden mit einem möglichst großen Achsabstand, ein Abheben der Vorderräder zu vermeiden. Zweiachsige Schleppfahrzeuge mit einer vorderen Lenkachse besitzen abhängig vom möglichen Einschlagwinkel der lenkbaren Räder und vom Achsabstand einen minimalen Wendekreis, durch welchen die Manövrierfähigkeit des Schleppfahrzeuges bestimmt und beschränkt wird.

Insbesondere beim Rangieren von Luftfahrzeugen in engeren Hallen wirkt sich die eingeschränkte Manövrierfähigkeit bekannter Schleppfahrzeuge nachteilig aus.

Zum Rangieren sehr kleiner und leichter Luftfahrzeuge, wie beispielsweise einmotoriger Sportflugzeuge, sind einachsige und gegebenenfalls motorbetriebene Schleppfahrzeuge bekannt, welche mittels einer Lenkstange von Hand gelenkt werden. Bei diesen Schleppfahrzeugen wird das Bugfahrwerk des Flugzeugs von dem Schleppfahrzeug aufgenommen, so daß der Auflastpunkt mit der Achse des Schleppfahrzeugs zusammenfällt. Gegebenenfalls weisen diese Schleppfahrzeuge ein vor der angetriebenen Achse angeordnetes und frei schwenkbares Stützrad auf. Bei einem solchen Schleppfahrzeug wird das Bugfahrwerk so auf dem Schleppfahrzeug aufgenommen, daß sich der Auflastpunkt zwischen der angetriebenen Achse und dem frei schwenkbaren Stützrad befindet. Für den Hauptantrieb des Schleppfahrzeuges ist ein Elektromotor oder benzingetriebener Motor vorgesehen. Die Lenkung des Schleppfahrzeuges erfolgt über eine beispielsweise im Vorderbereich des Schleppfahrzeuges angebrachte Lenkstange, durch welche das Schleppfahrzeug von einer Bedienperson in die gewünschte Richtung gezwungen wird. Bei Rangiervorgängen sind bei derartigen Schleppfahrzeugen nachteilig große Kräfte zum Überwinden von Reibungskräften zwischen den Rädern des Schleppfahrzeuges und dem Untergrund durch die Bedienperson notwendig. Darüber hinaus ist eine Verwendung derartiger Schleppfahrzeuge nur bei Flugzeugen mit geringer Bugradlast möglich und daher auf kleine und leichte Flugzeuge beschränkt. Werden die vom Schleppfahrzeug aufgenommenen Bugradstützlasten zu groß, wird ein Lenken des Schleppfahrzeuges durch die Bedienperson nahezu unmöglich.

Ausgehend von diesem Stand der Technik liegt der vorliegenden Erfindung die **Aufgabe** zugrunde, ein Fahrzeug für Luftfahrzeuge zu ermöglichen, welches unabhängig vom Typ und der Bauweise des zu transportierenden Luftfahrzeugs einsetzbar ist, ein das Luftfahrzeug nicht unnötig beanspruchendes und maschinell ablaufendes Laden des Luftfahrzeugs ermöglicht, verglichen mit dem Stand der Technik verbesserte Manövriereigenschaften aufweist, bedienderfreundlich und robust ist und kostengünstig herstellbar ist.

Diese Aufgabe wird durch ein gattungsgemäßes Fahrzeug **gelöst**, bei welchem die Räder oder Raupenfahrwerke einer Seite unabhängig von denen der anderen Seite angetrieben sind und das Fahrzeug durch Vorgabe unterschiedlicher Drehzahlen der Räder oder Raupenfahrwerke lenkbar ist.

Die Erfindung wird im folgenden anhand eines Fahrzeugs mit Rädern erläutert, selbstverständlich gelten sämtliche Erläuterungen ebenfalls für Raupenfahrwerke. Neben den angetriebenen Rädern weist das Fahrzeug wenigstens ein an geeigneter Stelle befindliches und um eine vertikale Achse frei schwenkbares, nicht angetriebenes Stützrad auf, allerdings ist ebenfalls ein Fahrzeug ohne ein solches Stützrad möglich. Obwohl die Erfindung im folgenden anhand eines Fahrzeuges mit jeweils einem Antriebsrad auf beiden Seiten der Längsachse des Fahrzeugs und einem frei schwenkbaren Stützrad beschrieben wird, ist es selbstverständlich ebenfalls möglich, daß das Fahrzeug auf jeder Seite der Längsachse mehrere Antriebsräder sowie mehrere frei schwenkbare Stützräder an beliebigen geeigneten Positionen aufweist.

Die beiden Antriebsräder des Fahrzeugs sind jeweils individuell antreibbar. Der Antrieb der Räder ist so konzipiert, daß die Antriebsräder sowohl mit unterschiedlichen als auch mit gleichen Drehzahlen rotiert werden können und daß die Drehzahlverhältnisse beider Antriebsräder in beliebiger Weise eingestellt werden können. Der Drehzahlbereich jedes Antriebsrades ist vorzugsweise vom Stillstand bis zu einer maximalen Drehzahl nₘₐₓ stufenlos einstellbar. Darüber hinaus kann vorteilhaft vorgesehen sein, daß die Drehrichtung der Antriebsräder umkehrbar ist. Durch den individuellen Einzelantrieb der Antriebsräder und die Einstellbarkeit der Rotationsgeschwindigkeit und ―richtung sowie das um eine vertikale Achse frei schwenkbar aufgehängte Stützrad ist das erfindungsgemäße Fahrzeug in beliebiger Weise manövrierbar. Beträgt das Drehzahlverhältnis beider Antriebsräder 1, so verfährt das Fahrzeug auf gerader Linie. Durch eine Variation des Drehzahlverhältnisses ist das Fahrzeug auf beliebigen Kurven verfahrbar. Befindet sich ein Antriebsrad im Stillstand, während das auf der anderen Seite des Fahrzeugs befindliche Antriebsrad sich dreht, so führt das Fahrzeug eine Wendung mit dem Auflagerpunkt des stillstehenden Antriebsrades als Drehpunkt auf. Bei entgegengesetzter Rotation der Antriebsräder mit gleichen Drehzahlen dreht das Fahrzeug um den Achsmittelpunkt der Achse beider Antriebsräder. Das frei schwenkbar angebrachte Stützrad paßt sich den jeweils ausgeführten Verfahrbewegungen des Fahrzeuges ohne Widerstand an.

Ein erfindungsgemäßes Transportfahrzeug ist neben dem Schleppen von Luftfahrzeugen ebenfalls zum Schleppen beliebiger anderer Fahrzeuge geeignet. Eine Verwendung des Transportfahrzeuges ist insbesondere für PKW, LKW, Baumaschinen, Anhänger, Wohnwagen etc. denkbar. Darüber hinaus ist ein Einsatz des Transportfahrzeuges als Handhabungsgerät für Langgüter, wie beispielsweise Rohre, Profilelemente oder Baumstämme, denkbar.

Gemäß einer Ausführungsform der Erfindung sind die Räder oder Raupenfahrwerke mit Linearmotoren angetrieben. Die Linearmotoren ermöglichen ein sehr genaues Drehen der Antriebsräder bei direktem Ansprechverhalten und ausreichender Krafterzeugung. Darüber hinaus benötigen die Linearmotoren keinen Vorlauf und weisen auch keinen Nachlauf auf.

Gemäß einer besonders vorteilhaften Ausführungsform der Erfindung sind die Linearmotoren Nabenmotoren. Diese Nabenmotoren werden vorteilhaft im Bereich der Nabe der Antriebsräder angebracht und benötigen keinen beim Rangieren vom Luftfahrzeug eingenommenen Bauraum. Darüber hinaus sind zur Kraftübertragung vom Antriebsmotor auf das Antriebsrad keine Getriebe oder andere Kraftübertragungseinheiten erforderlich. Durch die Antriebseinheiten des erfindungsgemäßen Fahrzeuges wird daher insgesamt Bauraum eingespart, weshalb das Fahrzeug eine ausgesprochen hohe Flexibilität hinsichtlich eines Einsatzes bei unterschiedlichen Typen und Bauformen der zu transportierenden Luftfahrzeuge aufweist. Durch den Wegfall von Getrieben und anderen Kraftübertragungseinheiten werden die Kosten für das Fahrzeug gesenkt.

Gemäß einer weiteren Ausführungsform der Erfindung ist das Fahrzeug mit Vorteil mittels einer Fernbedienung über Funk oder Kabel steuerbar. Es besteht die Möglichkeit, daß das Fahrzeug ausschließlich über eine derartige Fernbedienung oder alternativ zusätzlich über einen am Fahrzeug befindlichen Fahrerstand bedienbar ist. Durch Vorsehen einer derartigen Fernbedienung besteht für eine Bedienperson des Fahrzeuges vorteilhaft die Möglichkeit, ihren Standort relativ zum Fahrzeug und zum zu transportierenden Luftfahrzeug frei auszuwählen, wodurch die Übersichtlichkeit von Rangiervorgängen erheblich verbessert wird. Durch die freie Wahl ihres Standortes wird der Bedienperson die Möglichkeit eröffnet, selbst schwierige Rangiervorgänge alleine und ohne Zuhilfenahme von einweisenden Personen durchzuführen. So kann sich die Bedienperson bei schwierigen Rangiervorgängen in engen Flugzeughallen beispielsweise an den Flügelenden oder am Heck eines zu rangierenden Flugzeuges positionieren. Das Fahrzeug ist durch das Vorsehen einer Fernbedienung vorteilhaft hochflexibel einsetzbar.

Gemäß einer weiteren Ausführungsform der Erfindung weist das Fahrzeug eine Hubeinheit zum Anheben eines Fahrwerks auf. An der Hubeinheit kann eine Greifereinheit zur Aufnahme eines Rades des anzuhebenden Fahrwerkes angeordnet sein. Durch Ergreifen eines Rades des anzuhebenden Fahrwerkes ist die Verwendung des erfindungsgemäßen Fahrzeuges nicht auf eine bestimmte Ausgestaltung des Fahrwerkes beschränkt, sondern individuell für sämtliche Luftfahrzeugtypen mit bestimmten Radabmessungen einsetzbar. Die Greifereinheit erfaßt beispielsweise das Bugrad unterhalb seiner Rotationsachse. Bei Flugzeugen mit einem Heckrad besteht die Möglichkeit, dieses aufzunehmen. Ebenfalls können die Hauptfahrwerke aufgenommen werden.

Mit Vorteil weist die Hubeinheit eine im wesentlichen U-förmige Ausnehmung zur Aufnahme des Fahrwerkes auf. Die Hubeinheit ist vorteilhaft aus zwei voneinander beabstandeten Platten oder plattenartigen Elementen ausgebildet, zwischen denen die Greifereinheit angeordnet ist. Dadurch wird die Greifereinheit durch die Platten der Hubeinheit geführt und gestützt. Die Greifereinheit ist vorteilhaft im wesentlichen zangenförmig ausgebildet und gemäß einer weiteren Ausführungsform der Erfindung über eine Kulissenführung betätigbar. Die Kulissenführung kann dabei ebenfalls zwischen den Platten der Hubeinheit angeordnet sein. Eine mit einer derartigen Greifereinheit versehene Hubeinheit ist vorteilhaft verhältnismäßig flach und beansprucht keinen großen Bauraum. Die vom angehobenen Fahrwerk auf die Greifereinheit ausgeübten Stützkräfte werden von der durch die Hubeinheit geführten und gestützten Greifereinheit direkt in die Hubeinheit geleitet, wodurch die Greifereinheit entsprechend leicht ausgeführt werden kann. Die Greifereinheit ist aus zangenförmigen Greifelementen ausgebildet, welche beispielsweise mittels einer Feder im geöffneten Zustand vorgespannt sind. Durch Betätigung der Kulissenführung werden die Greifelemente gegen die Federvorspannung geschlossen und fixieren das aufzunehmende Rad des Luftfahrzeugs. Zum Öffnen der Greifereinheit wird die Kulissenführung ausgeschoben, woraufhin sich die Greiferelemente aufgrund ihrer Federvorspannung wieder öffnen. Selbstverständlich können die Greifelemente auch im geschlossenen Zustand durch Federelemente vorgespannt sein und durch die Wirkung der Kulisse geöffnet werden. Es ist ebenfalls möglich, das Fahrzeug mit einer am Fahrwerk des Luftfahrzeugs angreifenden Hubeinheit zu versehen.

Gemäß einer vorteilhaften Ausführungsform der Erfindung weist das Fahrzeug einen Hebelmechanismus auf, über den gleichzeitig die Kulissenführung und die Hubeinheit angetrieben werden. Der Hebelmechanismus ist derart ausgelegt, daß zunächst die Kulissenführung bewegt wird, bis die Greifereinheit geschlossen ist, und dann durch eine weitere Bewegung des Hebelmechanismusses die gesamte Hubeinheit inklusive der in dieser aufgenommenen Greifereinheit angehoben wird. Auf diese Weise ist sichergestellt, daß das Luftfahrzeug erst angehoben wird, nachdem das durch das Fahrzeug anzuhebende Fahrwerkrad entsprechend am Fahrzeug gesichert ist.

Weitere Vorteile und Merkmale der Erfindung ergeben sich aus der nun folgenden Beschreibung eines nicht beschränkenden Ausführungsbeispiels anhand der Figuren. Dabei zeigt:
- Fig. 1: ein Fahrzeug in einer schematischen Aufsicht mit einem Fahrwerksrad eines Luftfahrzeugs und
- Fig. 2: das Fahrzeug aus Fig. 1 in einer schematischen Seitenansicht.

Das Fahrzeug besteht im wesentlichen aus einem Fahrgestell 35, einer Hubeinheit 36, einer Greifereinheit 9 sowie einem Hebelmechanismus 22.

Das Fahrgestell 35 weist zwei Längsträger 2 sowie eine vordere, mittlere und hintere Querstrebe 4, 5, 6 auf. An den seitlichen Längsträgern 2 sind Radkästen 3 angeordnet. Sowohl die seitlichen Längsträger 2 als auch die Radkästen 3 sind als Schweißkonstruktion aus Blechplatten ausgebildet. Die Querstreben 4, 5, 6 sind in an den Längsträgern 2 angeordneten Hülsen 37 gelagert. Die vordere Querstrebe 4 ist dabei um ihre Längsachse drehbar. In den Radkästen 3 sind mittels geeigneter Radlager 15 ein rechtes Antriebsrad 11 und ein linkes Antriebsrad 12 angeordnet. Die Antriebsräder 11, 12 werden durch Nabenmotoren 13, 14 angetrieben. Die Nabenmotoren 13, 14 sind als Linearmotoren ausgebildet. Die Nabenmotoren 13, 14 treiben die Antriebsräder 11, 12 direkt ohne Zwischenschaltung eines Getriebes an.

Die Hubeinheit 36 weist eine obere Platte 7 und eine untere Platte 8 auf. Sowohl die obere Platte 7 als auch die untere Platte 8 sind mit einer im wesentlichen U-förmigen Aussparung 38 versehen, welche zur Aufnahme eines Bugrades 1 eines zu transportierenden Luftfahrzeuges dient. Die obere Platte 7 und die untere Platte 8 sind an der vorderen Querstrebe 4 festgelegt und mittels Längsverstrebungen 18 und Querverstrebungen 19 voneinander beabstandet und stabilisiert. Im bugradseitigen Bereich weist die Hubeinheit 36 Befestigungsmittel 39 beispielsweise in Form von Augenschrauben auf, an welchen Ketten eines Kettentriebes 28 befestigt sind. Die im bugradseitigen Bereich der Hubeinheit 36 befindlichen Querverstrebungen 19 wirken mit den Radkästen 3 zusammen und dienen auf diese Weise gleichzeitig als vertikale Führungselemente beim Verstellen der Hubeinheit 36.

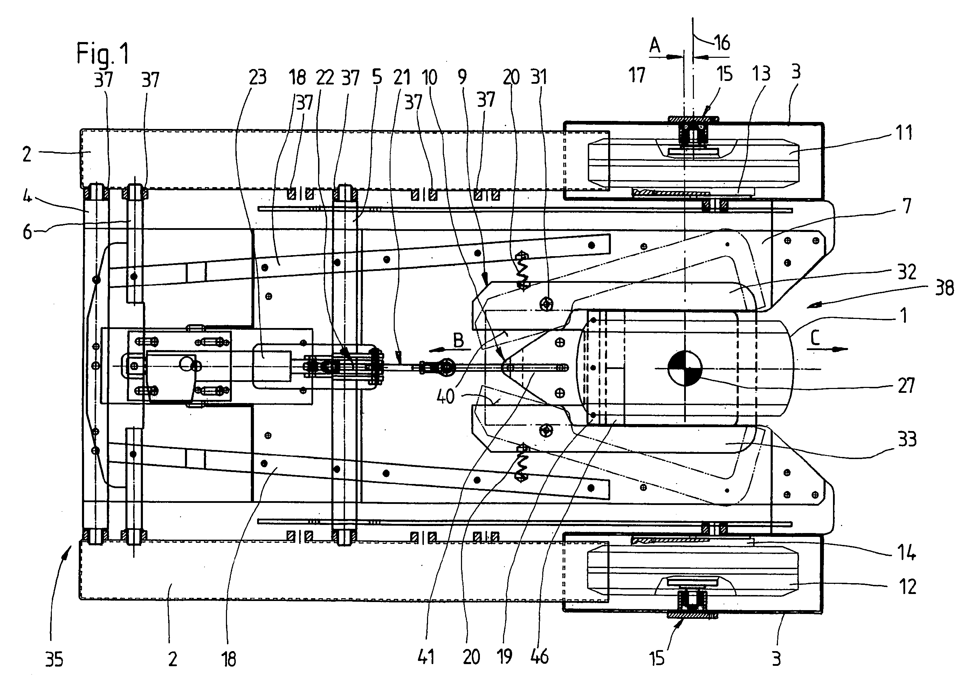

Die Greifereinheit 9 weist einen linken Greifarm 32 und einen rechten Greifarm 33 auf. Die Greifarme 32, 33 sind im wesentlichen L-förmig ausgebildet, als Zange angeordnet und jeweils mittels eines Lagers 31 zwischen der oberen Platte 7 und der unteren Platte 8 der Hubeinheit angeordnet. Der Abstand zwischen der oberen Platte 7 und der unteren Platte 8 ist auf die Abmessungen der Greifarme 32, 33 abgestimmt, so daß die Hubeinheit die Greifarme 32, 33 sowohl führt, als auch abstützt. Die Greifarme 32, 33 sind mit Führungsbahnen 40 versehen, welche mit einer Kulisse 10 zusammenwirken. Zwischen den Greifarmen 32, 33 und den Längsverstrebungen 18 sind Druckfedern 20 angeordnet, welche die Greifarme 32, 33 der Greifereinheit 9 in den geöffneten Zustand (in Fig. 1 gestrichelt dargestellt) vorspannen. Durch Verschieben der Kulisse 10 in die durch den Pfeil B gekennzeichnete Richtung drängt sich die Kulisse 10 zwischen die Führungsbahnen 40 der Greifarme 32, 33 und bewirkt ein Schließen der Greifarme 32, 33 gegen die Kraft der Druckfedern 20 in die in Fig. 1 dargestellte Lage (durchgezogene Linie).

Die Kulisse 10 ist mit einer Schubstange 21 verbunden. Die Schubstange 21 ist mittels eines ersten endseitigen Gelenkes 42 mit der Kulisse 10 und mittels eines zweiten endseitigen Gelenkes 42 mit einem Hebel 25 verbunden. Das kulissenseitige Gelenk 42 ist an einem Bolzen festgelegt, welcher in Langlöchern 41 der Kulisse 10 verschiebbar aufgenommen ist. Der Hebel 25 ist um die Längsachse der hinteren Querstrebe 5 herum schwenkbar an dieser angeordnet. An seinem der Schubstange 21 gegenüberliegenden Ende ist der Hebel 25 mit einer Kolbenstange 26 eines Hydraulikzylinders 23 verbunden, welcher fest auf einer auf den mittleren Quertreben 6 angeordneten Bodenplatte 43 platziert ist. An dem mit der Kolbenstange 26 verbundenen Ende des Hebels 25 ist darüber hinaus der Kettentrieb 28 befestigt. Der Kettentrieb 28 verläuft von dem Befestigungspunkt am Hebel 25 über eine vordere Umlenkrolle 20 und eine hintere Umlenkrolle 30 zu den Befestigungsmitteln 39 an der Hubeinheit 36.

An der Bodenplatte 43 ist ein Stützrad 24 angeordnet. Das Stützrad 24 ist mittels einer Lagerung 44 um eine vertikale Achse 45 herum schwenkbar. Im Bereich der Bodenplatte 43 sind nicht dargestellte Batterie- oder Akkueinheiten für die Energieversorgung des Fahrzeuges platziert.

Die Achse 16 der Antriebsräder 11, 12 und die Greifereinheit 9 sind so relativ zueinander platziert, daß eine durch den Lastaufnahmepunkt 27 (der Punkt an dem die Stützlast vom Luftfahrzeug auf das Fahrzeug wirkt) parallel zur Achse 16 verlaufende Querachse 17 zur Achse 16 um den Abstand A in Richtung des vorderen Stützrades 24 verschoben ist. Um die beim Rangieren vom Fahrzeug auf das Bugfahrwerk ausgeübten Kräfte möglichst zu minimieren, ist es zweckmäßig, das Fahrzeug so zu konzipieren, daß eine durch den Auflagerpunkt 27 verlaufende Vertikale die Achse 16 der Antriebsräder 11, 12 schneidet. In diesem Fall werden die bei einer Drehung des Fahrzeuges auf das Bugfahrwerk ausgeübten Kräfte und Momente minimal. Um allerdings die vom Luftfahrzeug auf das Fahrzeug ausgeübte Stützkraft sicher aufzunehmen, ist es erforderlich, diese sowohl auf die Antriebsräder 11, 12 als auch auf das Stützrad 24 zu verteilen. Dieses wird dadurch erreicht, daß der Auflagerpunkt wie zuvor beschrieben mit dem Abstand A vor der Achse 16 der Antriebsräder 11, 12 in Richtung des Stützrades 24 liegt. Je größer der Abstand A gewählt wird, desto sicherer wird die vom Luftfahrzeug auf das Fahrzeug ausgeübte Auflast auf alle drei Räder verteilt, allerdings wachsen mit ansteigendem Abstand A ebenfalls die beim Rangieren vom Fahrzeug auf das Bugfahrwerk ausgeübten Kräfte und Momente an.

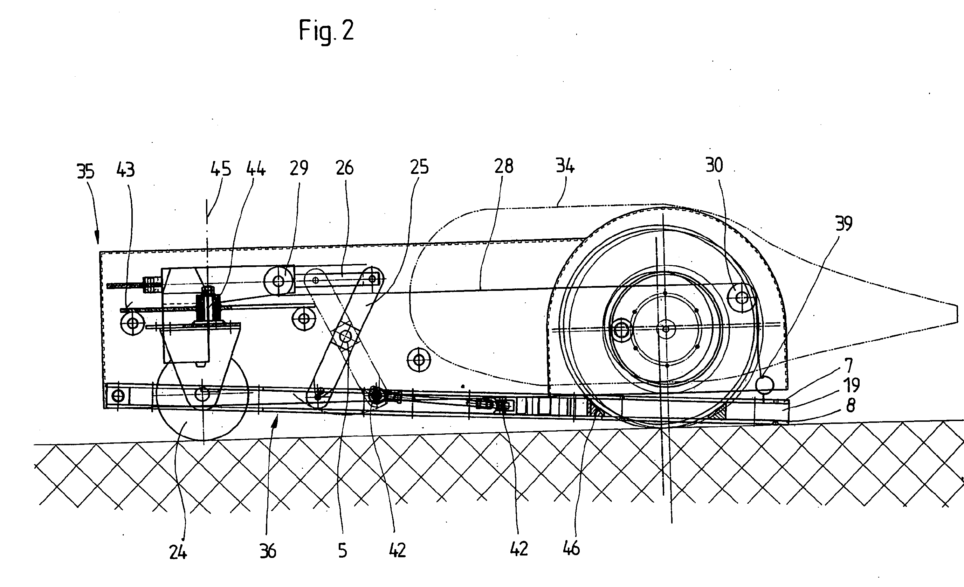

Zum besseren Verständnis der Erfindung wird im folgenden ein Ankuppelvorgang eines Luftfahrzeuges an das Fahrzeug beschrieben. Das Fahrzeug fährt rückwärts mit geöffneter Greifereinheit 9 (gestrichelt dargestellt) in Richtung des Pfeiles C auf das Bugrad 1 eines geparkten Luftfahrzeuges zu. Aus Fig.1 erkennt man, daß sich die Kulisse 10 bei geöffneten Greifarmen 32, 33 in einer hinteren (in Richtung der Greifarme geschoben) Stellung befindet. In diesem Zustand befindet sich der Hebel 25 in der in Fig. 2 gestrichelt dargestellten Stellung, die Kolbenstange 26 ist in den Hydraulikzylinder 23 eingefahren. Das wiederum bedeutet, daß die Hubeinheit 36 durch den in diesem Zustand ausgelassenen Kettentrieb 28 abgesenkt ist. In diesem Zustand wird das Fahrzeug soweit zurückgefahren, bis die vordere Kante des Bugrads 1 an eine vordere Anlage 46 der Hubeinheit 36 anstößt. In dieser Stellung wird das Fahrzeug angehalten und die Kolbenstange 26 des Hydraulikzylinders 23 ausgefahren. Durch dieses Ausfahren der Kolbenstange 26 wird der Hebel 25 um die hintere Querstrebe 5 herum geschwenkt. Diese Schwenkbewegung des Hebels 25 bewirkt ein Verschieben der Schubstange 21 in Richtung des Pfeils B. Durch diese Bewegung der Schubstange 21 werden die in den Langlöchern 41 aufgenommenen Bolzen in den Langlöchern 41 in Richtung des Stützrades 24 verschoben. Sobald die Bolzen an dem stützradseitigen Ende der Langlöcher 41 anliegen, bewirkt die Verschiebung der Schubstange 21 ein Verschieben der Kulisse 10 in Richtung des Pfeils B. Durch diese Verschiebung der Kulisse 10 werden die Greifarme 32, 33 der Greifereinheit 9 gegen die Vorspannkraft der Federn 20 in die geschlossene Stellung gedrängt (durchgezogen in Fig. 1 dargestellt). Gleichzeitig wird durch die Schwenkbewegung des Hebels 25 um die hintere Querstrebe 5 die Länge des Kettentriebs 28 verkürzt. Der Kettentrieb 28 wird durch die Schwenkbewegung des Hebels 25 um die Umlenkrollen 29 und 30 herum gezogen, so daß aufgrund dieser Bewegung des Kettentriebes 28 die Hubeinheit 36 angehoben wird. Durch dieses Hubbewegung der Hubeinheit 36 wird das Bugrad 1 des Luftfahrzeugs, welches mittlerweile durch die geschlossenen Greifarme 32, 33 der Greifereinheit sicher umgriffen ist, vom Boden abgehoben. Die gesamte bisher vom Bugrad 1 getragene vordere Stützlast des Luftfahrzeugs wird nun über die Greifereinheit 9 und die Hubeinheit 36 auf das Fahrzeug übertragen. Das Luftfahrzeug kann nun mit Hilfe des Fahrzeuges geschleppt und rangiert werden.

Durch die plattenartige Ausgestaltung der Hubeinheit 36 sowie die im wesentlichen U-förmige Gestalt des Fahrgestells 35 entsteht im Inneren des Fahrzeuges ein freier Raum, der ausreichend groß ist, um gegebenenfalls vorhandene aerodynamische Verkleidungen 34 des Bugrades aufzunehmen.

Das Fahrzeug kann von einem nicht dargstellten Führerstand aus gesteuert werden. Alternativ ist ebenfalls eine Steuerung über eine Fernsteuerung möglich. Diese Fernsteuerung kann mit dem Fahrzeug über Funk oder eine Kabelverbindung verbunden sein. Ebenfalls ist es möglich, daß das Fahrzeug sowohl von einem auf dem Fahrzeug fest installierten Führerstand aus, als auch mittels einer Fernbedienung steuerbar ist.

### B e z u g s z e i c h e n l i s t e

- 1: Bugrad
- 2: Längsträger
- 3: Radkasten
- 4: vordere Querstrebe
- 5: hintere Querstrebe
- 6: mittlere Querstrebe
- 7: obere Platte
- 8: untere Platte
- 9: Greifereinheit
- 10: Kulisse
- 11: rechtes Antriebsrad
- 12: linkes Antriebsrad
- 13: rechter Nabenmotor
- 14: linker Nabenmotor
- 15: Radlager
- 16: Achse der Antriebsräder
- 17: Querachse Lastaufnahme
- 18: Längsvertrebung
- 19: Querverstrebung
- 20: Druckfeder
- 21: Schubstange
- 22: Hebelmechanismus
- 23: Hydraulikzylinder
- 24: Stützrad
- 25: Hebel
- 26: Kolbenstange
- 27: Lastaufnahme
- 28: Kettentrieb
- 29: vordere Umlenkrolle
- 30: hintere Umlenkrolle
- 31: Lager der Greifer
- 32: Greifarm links
- 33: Greifarm rechts
- 34: Haube Bugrad
- 35: Fahrgestell
- 36: Hubeinheit
- 37: Hülse
- 38: U-förmige Aussparung
- 39: Befestigungsmittel
- 40: Führungsbahn
- 41: Langloch
- 42: Gelenk
- 43: Bodenplatte
- 44: Lagerung
- 45: vertikale Achse
- 46: vordere Anlage
- A: Abstand Radachse-Auflastpunkt
- B: Schubrichtung zum Schließen der Kulisse
- C: Fahrrichtung rücktwärts

## Patentansprüche

1. Fahrzeug zum Schleppen und Rangieren von Luftfahrzeugen, mit welchem ein Fahrwerk eines Luftfahrzeugs aufnehmbar und vom Untergrund abhebbar ist und welches auf jeder Seite der Längsachse des Fahrzeugs wenigstens ein Rad oder Raupenfahrwerk aufweist,
**dadurch gekennzeichnet, daß**
die Räder oder Raupenfahrwerke einer Seite unabhängig von denen der anderen Seite angetrieben sind und das Fahrzeug durch Vorgabe unterschiedlicher Drehzahlen der Räder oder Raupenfahrwerke lenkbar ist.

2. Fahrzeug nach Anspruch 1, **dadurch gekennzeichnet, daß** die Räder oder Raupenfahrwerke mit Linearmotoren angetrieben sind.

3. Fahrzeug nach Anspruch 1 oder 2, **dadurch gekennzeichnet, daß** die Linearmotoren Nabenmotoren sind.

4. Fahrzeug nach zumindest einem der Ansprüche 1 bis 3, **dadurch gekennzeichnet, daß** das Fahrzeug mittels einer Fernbedienung über Funk oder Kabel steuerbar ist.

5. Fahrzeug nach zumindest einem der Ansprüche 1 bis 4, **dadurch gekennzeichnet, daß** das Fahrzeug eine Hubeinheit zum Anheben eines Fahrwerks des Luftfahrzeugs aufweist.

6. Fahrzeug nach zumindestens einem der Ansprüche 1 bis 5, **dadurch gekennzeichnet, daß** an der Hubeinheit eine Greifereinheit zur Aufnahme eines Rades des anzuhebenden Fahrwerkes angeordnet ist.

7. Fahrzeug nach zumindest einem der Ansprüche 1 bis 6, **dadurch gekennzeichnet, daß** die Hubeinheit eine im wesentlichen U-förmige Ausnehmung zur Aufnahme des Fahrwerks aufweist.

8. Fahrzeug nach zumindest einem der Ansprüche 1 bis 7, **dadurch gekennzeichnet, daß** die Hubeinheit im wesentlichen aus zwei voneinander beabstandeten Platten ausgebildet ist.

9. Fahrzeug nach Anspruch 8, **dadurch gekennzeichnet, daß** die Greifereinheit zwischen den Platten der Hubeinheit angeordnet ist.

10. Fahrzeug nach zumindest einem der Ansprüche 1 bis 9, **dadurch gekennzeichnet, daß** die Greifereinheit im wesentlichen zangenartig ausgebildet ist.

11. Fahrzeug nach zumindest einem der Ansprüche 1 bis 10, **dadurch gekennzeichnet, daß** die Greifereinheit über eine Kulissenführung betätigbar ist.

12. Fahrzeug nach zumindest einem der Ansprüche 1 bis 11, **dadurch gekennzeichnet, daß** das Fahrzeug einen Hebelmechanismus aufweist, über welchen gleichzeitig die Kulissenführung und Hubeinheit angetrieben werden.

13. Verwendung eines Fahrzeuges nach zumindest einem der Ansprüche 1 bis 12 zum Schleppen und Rangieren von Kraftfahrzeugen und Anhängern und als Handhabungsgerät für Langgüter.
